# EUROPÄISCHE PATENTSCHRIFT

(11) **EP 3 903 469 B1**
(45) Veröffentlichungstag und Bekanntmachung des Hinweises auf die Patenterteilung: **18.01.2023**
(21) Anmeldenummer: 20714874.3
(22) Anmeldetag: 10.03.2020
(51) Int. Cl.: H04L 9/00

(54) **FUNKTIONAL-SICHERE VERBINDUNGSIDENTIFIZIERUNG FÜR EINE M2M KOMMUNIKATION**
FUNCTIONAL SECURE CONNECTION IDENTIFICATION FOR AN M2M COMMUNICATION
IDENTIFICATION DE CONNEXION SÉCURITAIRE FONCTIONNELLE POUR UNE CONNEXION M2M

(30) Priorität: 28.03.2019 EP 19165804
(43) Veröffentlichungstag der Anmeldung: 03.11.2021
(73) Patentinhaber: Siemens Aktiengesellschaft, 80333 München (DE)
(72) Erfinder: BARTHEL, Herbert, 91074 Herzogenaurach (DE); MEYER, Thomas Markus, 90475 Nürnberg (DE); SCHMID, Frank, 92348 Berg bei Neumarkt i. d. Opf. (DE); WALTER, Maximilian, 90408 Nürnberg (DE)
(86) Internationale Anmeldenummer: PCT/EP2020/056311
(87) Internationale Veröffentlichungsnummer: WO 2020/193115

(56) Entgegenhaltungen:
- EP-A1- 3 051 779
- DE-A1-102014 201 954
- US-B1- 9 801 056
- PERVEZ FARRUKH ET AL: "Wireless Technologies for Emergency Response: A Comprehensive Review and Some Guidelines", IEEE ACCESS, Bd. 6, 7. Dezember 2018 (2018-12-07), Seiten 71814-71838, XP011699456, DOI: 10.1109/ACCESS.2018.2878898

## Beschreibung

Die Erfindung betrifft ein Verfahren zur funktional sicheren Verbindungsidentifizierung bei einem zweitseitigen Datenaustausch von sicherheitsgerichteten Daten zwischen zwei Kommunikationsteilnehmern in einem Kommunikationssystem. Sicherheitsgerichtete Daten sind dadurch gekennzeichnet, dass sie mittels sicherheitsgerichteter Kommunikation ausgetauscht werden. Zur sicherheitsgerichteten Kommunikation werden Ziel- und Quelladressen umfassende Adressbeziehungen fest projektiert. Darüber hinaus wird in einem ersten Kommunikationsteilnehmer ein erster Datenverbraucher mit einer ersten Adresskennung und ein erster Datenanbieter betrieben. In einem zweiten Kommunikationsteilnehmer wird ein zweiter Datenanbieter mit einer dritten Adresskennung und zusätzlich ein zweiter Datenverbraucher betrieben. Zwischen dem ersten Datenverbraucher und dem zweiten Datenanbieter wird eine erste unidirektionale Verbindung aufgebaut, während zwischen dem ersten Datenanbieter und dem zweiten Datenverbraucher eine zweite unidirektionale Verbindung aufgebaut wird. In diesem Zusammenhang wird unter Datenverbraucher eine Kommunikationseinrichtung verstanden, durch die Daten von einer anderen Kommunikationseinrichtung angefordert werden, während ein Datenanbieter eine Kommunikationseinrichtung darstellte, die Daten an andere Kommunikationseinrichtungen bereitstellt. Beispielsweise können Daten hierbei im Sinn eines Client-Server- oder Publisher-Subscriber-Konzepts bereitgestellt und verteilt werden.

Eine funktional sichere Kommunikation und Verbindungsidentifizierung wird beispielsweise mittels PROFIsafe realisiert.

Die Systembeschreibung "PROFIsafe Systembeschreibung, Technologie und Anwendung", Version April 2016, Bestell-Nr. 4.341, Herausgeber PROFIBUS Nutzerorganisation e.V. (PNO) beschreibt die Realisierung einer sicherheitsgerichteten Kommunikation und insbesondere einer sicheren Verbindungsidentifizierung bei PROFIBUS und PROFINet Protokollen.

Auch das Handbuch "SIMATIC, Industrie Software S7 F/FH Systems - Projektieren und Programmieren", Ausgabe 05/2009, A5E00048979-06 beschreibt eine sicherheitsgerichtete Kommunikation, insbesondere bei SIMATIC Steuerungen.

Der wissenschaftliche Artikel von Pervez Farukh et al "Wireless Technologies for Emergency Response: A Comprehensive Review and Some Guidelines", IEEE ACCESS, Bd. 6, vom 7. Dezember 2018, Seiten 71814-71838, ist ebenfalls hier zu nennen.

All den genannten und aufgezeigten bekannten Verfahren zur sicherheitsgerichteten Kommunikation, insbesondere in der Automatisierungstechnik, ist gemeinsam, dass die Adressbeziehung, umfassend Ziel- und Quelladresse, beispielsweise von PROFIsafe-Teilnehmern auf PROFIBUS oder PROFINet, fest projektiert ist.

Als Beispiel sei das Sicherheitsprotokoll PROFIsafe genannt. Bei PROFIsafe wird ein 32 Bit Codename, welcher einer Adressbeziehung entspricht, zur eindeutigen Verbindungsidentifizierung genutzt.

Bei der funktional sicheren Kommunikation beispielsweise bei PROFIsafe muss garantiert werden, dass eine Restfehlerwahrscheinlichkeit pro Zeiteinheit hinreichend klein ist. Betrachtet werden Verletzungen der Datenintegrität (Datenintegrität wird durch eine Signatur - z.B. CRC - überprüft), einer Authentizität (Authentizität wird durch einen Vergleich mit einer Quell- und Zieladresse oder mit einem Codenamen überprüft) und einer Timelines (Timelines bedeutet: Telegrammdaten dürfen nur verwendet werden, wenn sie in der richtigen Reihenfolge und rechtzeitig empfangen werden).

Insbesondere bei einer Kommunikation in neueren Industrieanlagen soll es möglich werden, dass Kommunikationsbeziehungen häufig und schnell wechseln können, d.h. ein Kommunikationsteilnehmer benötigt zu einem Zeitpunkt Informationen von einem bestimmten anderen Kommunikationsteilnehmer und zu einem anderen Zeitpunkt wiederum von einem anderen Kommunikationsteilnehmer. Beispiele hierzu sind rekonfigurierbare modulare Maschinen, fahrerlose Transportsysteme (AGV's), Werkzeugwechsler, Spannrahmen, Krankatzen usw.

Aus der Druckschrift EP 3 051 779 A1 des Anmelders SIEMENS AG [DE] vom 3. August 2016 ist ein Verfahren zum gesicherten Kommunikationsaufbau nach anfänglicher Prüfung von Kennungen bekannt.

Nach dem aufgezeigten Stand der Technik muss zwischen allen potentiellen Kommunikationspartnern jeweils eine funktionale sichere Kommunikationsverbindung fest programmiert und projektiert werden. Bei n-Teilnehmern sind dies bis zu n • (n-1) Verbindungen, von denen zu einem Zeitpunkt jeweils nur ein sehr geringer Teil gleichzeitig aktiv ist. Für jede dieser Verbindungen muss aber ein eindeutiger Authentizitäts-Code (AA-Code bei Profisafe: Codename) vergeben werden, der dazu dient, Adressierungsfehler (d.h. Zustellung eines Kommunikationstelegramms an einen falschen Empfänger) sicher zu erkennen.

Bei dem genannten Stand der Technik funktionieren diese Verfahren allerdings nur für unidirektionale Verbindungen, es wird also davon ausgegangen, dass sicherheitsbezogene Daten nur von einem Gegenüber zu einem Initiator fließen, aber nicht in umgekehrte Richtung.

Es ist Aufgabe der Erfindung eine verfahrenstechnische Lösung bzw. eine Anordnung bereitzustellen, bei welchen ein Datenaustausch mit sicherheitsgerichteten Daten auch für bidirektionale Verbindungen funktional sicher durchgeführt werden kann.

Die Aufgabe wird für das eingangs genannte Verfahren dadurch gelöst, wie im anhängenden Anspruch 1 definiert.

Erfindungsgemäß wird vorgeschlagen eine Abbildung zu definieren, die einer Consumer-ID jeder bidirektionalen Verbindung einer Provider-ID desselben Endpunktes zuordnet, und diese Abbildung den beiden Endpunkten a priori bekannt zu machen. Beispielsweise könnte diese Abbildung aus dem Einerkomplement oder alternativ aus dem Zweierkomplement bestehen. Die Verbindung zwischen dem Datenanbieter und den Datenverbraucher wird dabei aufgebaut wie im anhängenden Anspruch 1 beschrieben. Der Datenverbraucher erhält die Adresskennung vom Datenanbieter beispielsweise über einen zusätzlichen Seitenkanal. Nach dem Verbindungsaufbau kann die Kennung vom Datenanbieter sicher geprüft werden.

Der Aufbau der Gegenrichtung zwischen dem weiteren Datenanbieter und dem weiteren Datenverbraucher war nach dem Stand der Technik nicht ohne weiteres möglich, da der weitere Datenverbraucher die Kennung vom weiteren Datenanbieter nicht kennt. Die bereits in einer Richtung bestehende erste unidirektionale Verbindung kann für den Austausch dieser Kennung nicht verwendet werden, da dafür genau die umgekehrte Richtung benötigt werden würde. Erfindungsgemäß bedeutet das nun, dass beispielsweise die Kennung des Verbrauchers stets dem Einerkomplement der Kennung des Anbieters entspricht, da die Kennung des weiteren Verbrauchers dem weiteren Datenanbieter beim Verbindungsaufbau mitgeteilt wird, und diese Information auch an eine Safety-Anwendung weitergegebenen werden kann, kann die Kennung des weiteren Datenanbieters im Gegenüber zur Laufzeit berechnet werden, und anschließend beim Aufbau der Verbindung zwischen dem weiteren Datenverbraucher und dem weiteren Datenanbieter für einen funktional sicheren Verbindungsaufbau verwendet werden.

Mit Vorteil wird daher verfahrensgemäß der zweite Datenverbraucher ein zweites Anfrage-Telegramm an den ersten Datenanbieter senden, der erste Datenanbieter mit einem zweiten Antwort-Telegramm antworten, in dem zweite sicherheitsgerichtete Daten und die nach der Rechenvorschrift berechnete Kennung enthalten sind, wobei im zweiten Daten-Verbraucher geprüft wird, ob das zweite Antwort-Telegramm die Kennung enthält, und für den Fall, dass diese Prüfung positiv ausfällt, werden die zweiten sicherheitsgerichteten Daten akzeptiert und ansonsten verworfen.

Für eine praktische Codeimplementierung ist es später von Vorteil, wenn der ersten Datenanbieter mit einer zweiten Adresskennung betrieben wird und diese zweite Adresskennung als der eindeutige Wert, verwendet wird. Durch die Prüfung der mitgelieferten Adresskennungen der jeweiligen Datenverbraucher wird letztendlich geprüft, ob die sicherheitsgerichteten Daten von einem richtigen Sender kommen oder z.B. aufgrund eines Netzwerkfehlers von einem falschen Sender kommen. Im allgemeinen Fall, erfolgt die Datenübertragung in beide Richtungen d.h. es findet eine funktional sichere bidirektionale Datenübertragung statt.

Insbesondere im Hinblick auf den Einsatz von neuen Kommunikationsverfahren und neuen Datenstrukturen ist es verfahrensgemäß von Vorteil, wenn als Kommunikationssystem, ein System basierend auf OPC UA Client/Server-Mechanismen mit einer TCP/IP-Kommunikation oder ein System basierend auf OPC UA Pup/Sub-Mechanismen mit einer TCP/IP-Kommunikation ergänzt um die Mechanismen für ein Time Sensitive Network verwendet wird.

Das erfindungsgemäß beschriebene Verfahren kann mit besonderem Vorteil bei einer Safety Kommunikation über ein OPC UA Kommunikationssystem eingesetzt werden. Eine bidirektionale, vorzugsweise funktional sichere Verbindung besteht bei OPC UA Kommunikation nämlich intern aus zwei unidirektionalen, funktional sicheren Verbindungen. Jede unidirektionale Verbindung wird zwischen einem Provider (Datenanbieter) und einem Consumer (Datenverbraucher) aufgebaut. Insgesamt gibt es demnach also zwei Provider und zwei Consumer, genannt PI, CG, PG, CI für "Provider Initiator", "Consumer Gegenüber", "Provider Gegenüber" und "Consumer Initiator".

Die nach dem Stand der Technik bewährten Protokoll-Sicherheitsmechanismen (z.B. CRC Prüfung, Code Names, Monitoring Number, Watchdog Überwachung und SIL-Monitor (sichere Begrenzung der erkannten Fehler)) können zwar übernommen werden, reichen aber zukünftig nicht mehr aus. Vor dem Hintergrund von Industrie 4.0 ist außerdem die Unterstützung flexibler Anlagenstrukturen mit wechselnden Kommunikationspartnern von entscheidender Bedeutung. Mit einem Sicherheitsprotokoll für OPC UA kann jede beliebige Netztopologie unterstützt werden, wobei Verbindungen prinzipiell auch zur Laufzeit auf- und abgebaut werden können. Ein gegebenes Interface kann abwechselnd von verschiedenen Partnern genutzt werden. Davon profitieren z.B. modulare Maschinen wie Autonomes Guided Vehicles (AGV's) oder autonome mobile Roboter (AMR's), Werkzeugwechsler usw..

Anders als bei heutigen funktional sicheren Kommunikationsprotokollen müssen nicht mehr alle Teilnehmer schon bei der Projektierung gegenseitig bekannt gemacht werden. Dadurch wird es möglich, der Anlage, z.B. einen neuen mobilen Roboter hinzuzufügen, ohne alle feststehenden Maschinen neu parametrieren zu müssen. Mit OPC UA ist ein Objekt orientiertes Informationsmodel eingeführt worden und mit der erfindungsgemäßen funktional sicheren Verbindungsidentifizierung kann nun mit OPC UA eine sichere Controller-Controller-Kommunikation durchgeführt werden.

Daher wird mit Vorteil der erste Kommunikationsteilnehmer durch eine oder in einer autonomen Robotereinheit betrieben und der zweite Kommunikationsteilnehmer durch eine oder in einer Maschine betrieben, wobei nach einem Anfahren der Robotereinheit an die Maschine die Kommunikation aufgebaut wird. Dieses Verfahren wird dann vorteilhaft eingesetzt, wenn eine Menge von autonomen mobilen Robotern in einer Fabrikhalle zu verschiedenen Maschinen fahren müssen. Zu jedem Zeitpunkt kann sich nur ein Roboter an einer Maschine befinden. Befindet sich ein Roboter an einer Maschine, wird eine funktional sichere Verbindung zwischen Maschine und Roboter, z.B. über ein drahtloses Netz aufgebaut. Aber bevor Daten ausgetauscht werden, muss geprüft werden, ob der Roboter mit der richtigen Maschine und nicht z.B. mit einer benachbarten Maschine kommuniziert.

Für den Fall, dass ein maximaler Zahlen-Wert der zweiten Adresskennung eine in einem verwendeten Protokoll zur Verfügung stehende Wortbreite überschreitet, wird der erste Datenverbraucher die zweite Adresskennung in Teile aufteilen und die Teile mit Teil-Anfrage-Telegrammen an den zweiten Datenanbieter senden, und dieser die Teile zusammenfasst und daraus die zweite Adresskennung ermittelt, wobei nach feststehender zweiter Adresskennung der zweite Datenverbraucher ein Final-Anfrage-Telegramm sendet und dieses mit dem zweiten Antwort-Telegramm beantwortet wird, in dem die zweiten sicherheitsgerichteten Daten und die zweite Adresskennung enthalten sind.

Es kann vorkommen, dass eine Provider ID länger ist als eine Consumer ID. Eine eindeutige Berechnung der Provider ID aus der Consumer ID ist dann nicht mehr möglich. Deshalb wird hier auch vorgeschlagen, den Platz für die im Rahmen der vom Consumer abgesetzten Anfrage verwendeten "Monitoring Number" zu verwenden, um die zusätzlichen Bits der ID zu übertragen. Die aktuellen Werte der "Monitoring Number" können laut Spezifikation vom Consumer frei gewählt werden. Dies kann genutzt werden, um dem Gegenüber die Übertragung der ID des PI zu signalisieren, z.B. in dem die "Monitoring Number" auf Null gesetzt wird. Die Übertragung der ID kann dann in der Monitoring Number der folgenden Telegramme, oder im Feld "Consumer ID" erfolgen.

Bei einer Anordnung mit einem ersten Kommunikationsteilnehmer und einem zweiten Kommunikationsteilnehmer, welcher über ein Kommunikationssystem Daten austauschen, wobei der erste Kommunikationsteilnehmer einen ersten Datenverbraucher mit einer ersten Adresskennung und einen ersten Datenanbieter mit einer zweiten Adresskennung aufweist, der zweite Kommunikationsteilnehmer einen zweiten Datenanbieter mit einer dritten Adresskennung und einen zweiten Datenverbraucher aufweist, wobei Mittel vorhanden sind, um zwischen dem ersten Datenverbraucher und dem zweiten Datenanbieter einer erste unidirektionale Verbindung und zwischen dem ersten Datenanbieter und dem zweiten Datenverbraucher eine zweite unidirektionale Verbindung aufzubauen, wird als Lösung eine Anordnung, wie im anhängenden Anspruch 7 beschrieben, vorgeschlagen.

Die Anordnung sieht weiterhin vor, dass der zweite Datenverbraucher ausgestaltet ist, ein zweites Anfrage-Telegramm an den ersten Datenanbieter zu senden, der erste Datenanbieter ausgestaltet ist, mit einem zweiten Antwort-Telegramm zu antworten, in dem zweite sicherheitsgerichtete Daten und die Kennung enthalten sind, wobei der zweite Datenverbraucher Gegenprüfmittel aufweist, welche ausgestaltet sind, zu prüfen, ob das zweite Antwort-Telegramm die Kennung enthält, und für den Fall, dass diese Prüfung positiv ausfällt, werden die zweiten sicherheitsgerichteten Daten akzeptiert und ansonsten verworfen.

Insbesondere im Hinblick auf die Digitalisierung und die Realisierung der Industrie 4.0 innerhalb der Prozessautomatisierung ist es von Vorteil, wenn das Kommunikationssystem ausgestaltet ist, als ein System welches eine Controller-Controller-Kommunikation, basierend auf OPC UA Client/Server Mechanismen mit einer TCP/IP-Kommunikation aufweist oder wenn ein System eingesetzt wird, welches basiert auf OPC UA Pub/Sub-Mechanismen mit einer TCP/IP-Kommunikation ergänzt um die Mechanismen für ein Time Sensitive Network vorhanden ist.

Für das Ermitteln der dritten Adresskennung kann vorteilhafterweise entweder ein vom Kommunikationssystem unabhängiger Seitenkanal genutzt werden, welcher dabei ausgestaltet ist, die dritte Adresskennung für den ersten Datenverbraucher bereit zu stellen oder es wird in einer alternativen Ausgestaltung dafür gesorgt, dass die Anordnung ein Ermittlungsmittel aufweist, welches ausgestaltet ist, auf eine Konfigurationsdatenbank zuzugreifen und weiterhin umfasst der erste Kommunikationsteilnehmer Positionsermittlungsmittel, welche ausgestaltet sind die Positionsdaten des ersten Kommunikationsteilnehmer zu ermitteln, dabei ist das Ermittlungsmittel dazu ausgestaltet auf der Basis der Positionsdaten mit der Konfigurationsdatenbank die dritte Adresskennung zu ermitteln.

Mit Vorteil wird die Anordnung bei autonomen mobilen Robotereinheiten eingesetzt, eine autonome mobile Robotereinheit weist dann den ersten Kommunikationsteilnehmer auf und eine Maschine weist dann den zweiten Kommunikationsteilnehmer auf, wobei die Robotereinheit ausgestaltet ist die Maschine anzufahren und eine Kommunikation aufzubauen.

Zusammengefasst kann gesagt werden, dass nun mit Vorteil ein Verfahren und eine Anordnung zur Verfügung gestellt worden ist, bei welchem es möglich ist, eine funktional sichere Verbindungsidentifizierung zu realisieren, bei welchem es nicht mehr notwendig ist, dass ein Überwachungsmechanismus auf Seiten des Datenanbieters hinsichtlich der Kommunikationsbeziehungen durchgeführt werden muss. Mit diesem Verfahren und mit dieser Anordnung zur funktional sicheren Verbindungsidentifizierung erhält man eine "Beziehungs-flexible funktional sichere Kommunikation mit einer einseitigen Prüfung für einen zweiseitigen Datenaustausch".

Die Zeichnung zeigt mehrere Ausführungsbeispiele der Erfindung, dabei zeigt die
- FIG 1: ein Maschinen-Robotersystem, wobei die Roboter mit den Maschinen funktional sichere bidirektionale Verbindungen aufbauen,
- FIG 2: ein Maschine-Bedienpanel-System, wobei die Bedienpanel mit den Maschinen eine funktional sichere bidirektionale Verbindung aufbauen können,
- FIG 3: eine Anordnung ausgestaltet als eine ControllerController-Kommunikationseinrichtung,
- FIG 4: einen zeitlichen Ablauf von Anfrage-Telegrammen zwischen einem ersten und zweiten Kommunikationspartner in einer ersten Variante und
- FIG 5: einen zeitlichen Ablauf von Anfrage-Telegrammen zwischen einem ersten und zweiten Kommunikationsteilnehmer in einer zweiten Variante.

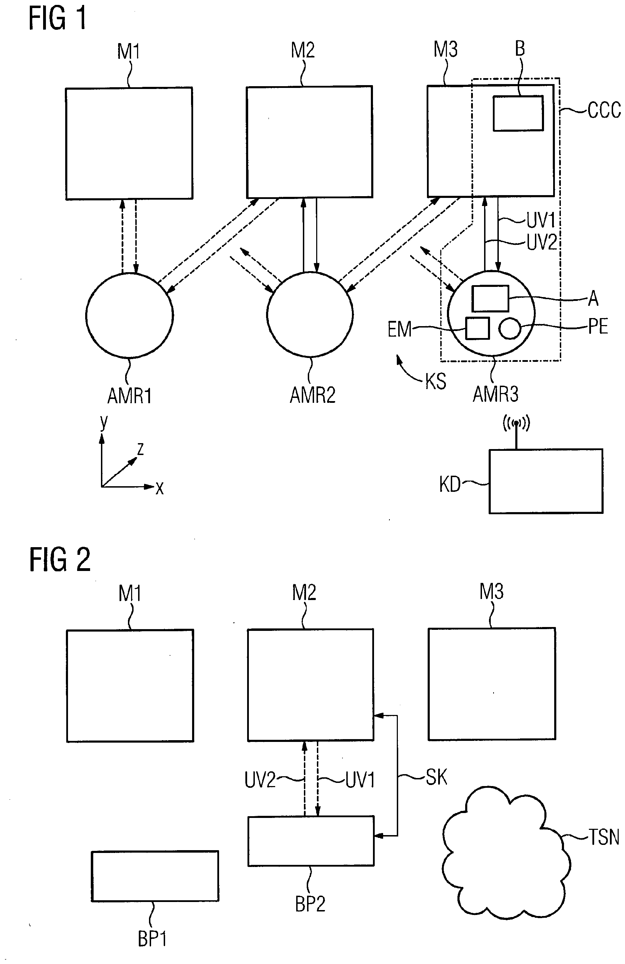

Gemäß FIG 1 sind eine erste Maschine M1, eine zweite Maschine M2 und eine dritte Maschine M3, welche mit einer ersten autonomen mobilen Robotereinheit AMR1, einer zweiten autonomen mobilen Robotereinheit AMR2 und einer dritten autonomen mobilen Robotereinheit AMR3 funktional sichere Verbindungen aufbauen können gezeigt. Funktional sicher bedeutet hier insbesondere, dass der Empfänger prüfen kann, ob die entgegengenommenen Daten vom richtigen Sender kommen, und nicht z.B. aufgrund eines Netzwerkfehlers oder einer Mobilfunkstörung von einem anderen Sender empfangen wurden. Im allgemeinen Fall erfolgt die Datenübertragung in beide Richtungen, d.h. es findet hier eine bidirektionale Datenübertragung statt. Die autonomen mobilen Robotereinheiten AMR1,AMR2,AMR3 befinden sich in einer Fabrikhalle mit einer Ausdehnung, welche über ein Koordinatensystem XYZ beschrieben werden kann. Gemäß FIG 1 wird als Kommunikationssystem KS beispielsweise ein Funkstandard mit einem übergestülpten PROFIsafe Protokoll verwendet. Auch könnte ein PROFINet Standard, bei welchem eine Kommunikation über Ethernet erfolgt, verwendet werden, dazu müssten die Roboter allerdings mechanisch an die Maschinen andocken.

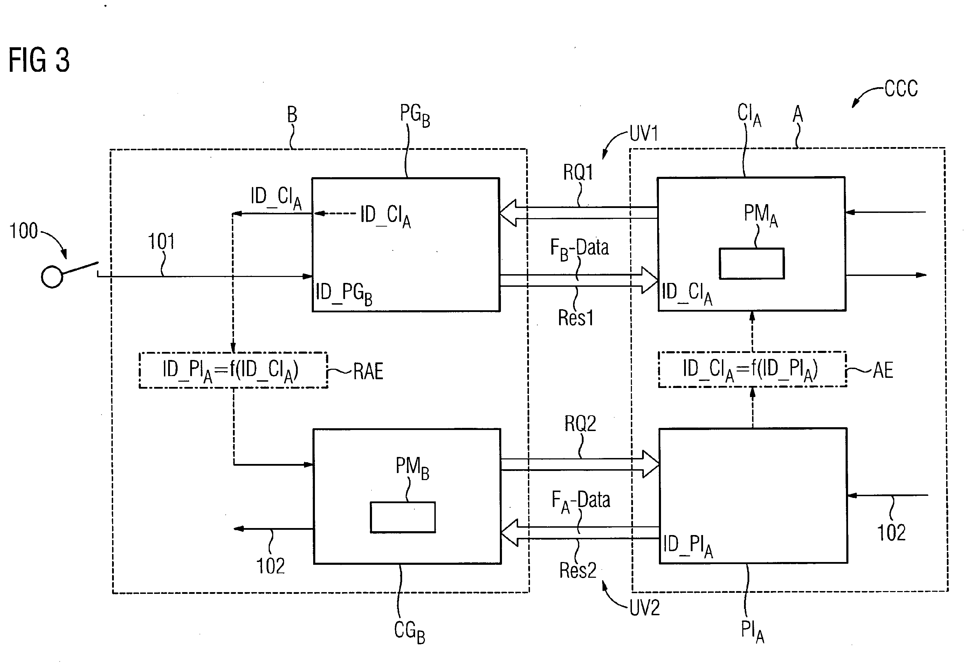

Der dritte autonome mobile Roboter AMR3 weist den ersten Kommunikationsteilnehmer A auf und die dritte Maschine M3 weist den zweiten Kommunikationsteilnehmer B auf. Die beiden Kommunikationsteilnehmer A,B bilden eine Anordnung CCC, welche mit FIG 3 näher beschrieben wird.

Fährt der dritte autonome mobile Roboter AMR3 an die Maschine M3 baut er eine Verbindung über den ersten Kommunikationsteilnehmer A mit dem zweiten Kommunikationsteilnehmer B auf und er stellt somit eine erste unidirektionale Verbindung UV1 und eine zweite unidirektionale Verbindung UV2 her. Der dritte autonome mobile Roboter AMR3 weist zusätzlich ein Positionsermittlungsmittel PE auf, mit welchen er seine Positionsdaten X,Y,Z ermitteln kann. Zusätzlich weist der dritte autonome mobile Roboter AMR3 ein Ermittlungsmittel EM auf, welches ausgestaltet ist auf eine Konfigurationsdatenbank KD zuzugreifen, wobei das Ermittlungsmittel weiterhin dazu ausgestaltet ist, auf der Basis der Positionsdaten X,Y,Z mit der Konfigurationsdatenbank KD die dritte Adresskennung ID_PG_{B} zu ermitteln.

Gemäß FIG 2 ist ein weiteres Ausführungsbeispiel für einen funktional sicheren Verbindungsaufbau zwischen mobilen Geräten und Maschinen gezeigt. Die erste Maschine M1, die zweite Maschine M2 und die dritte Maschine M3 können über unterschiedliche Bedienpanel BP1,PB2 bedient werden. In diesem Fall hat sich ein zweites Bedienpanel PB2 an die zweite Maschine M2 angemeldet und baut über einen Seitenkanal SK eine erste sichere unidirektionale Verbindung UV1 und eine zweite sichere unidirektionale Verbindung UV2 auf. Als Kommunikationssystem KS wird ein Time Sensitive Network TSN genutzt.

Die FIG 3 zeigt eine Anordnung CCC zur Controller-Controller-Communication. Ein erster Kommunikationsteilnehmer A baut mit einem zweiten Kommunikationsteilnehmer B zwei unidirektionale funktional sichere Verbindungen UV1, UV2 auf. Der erste Kommunikationsteilnehmer A weist einen ersten Datenverbraucher CI_{A} mit einer ersten Adresskennung ID_CI_{A} und einen ersten Datenanbieter PI_{A} mit einer zweiten Adresskennung ID_PI_{A} auf. Der zweite Kommunikationsteilnehmer B weist einen zweiten Datenanbieter PG_{B} mit einer dritten Adresskennung ID_PG_{B} und einen zweiten Datenverbraucher CG_{B} auf.

Weiterhin sind Mittel vorhanden, um zwischen dem ersten Datenverbraucher CI_{A} und den zweiten Datenanbieter PG_{B} eine erste unidirektionale funktional sichere Verbindung UV1 und zwischen dem ersten Datenanbieter PI_{A} und dem zweiten Datenverbraucher CG_{B} eine zweite unidirektionale funktional sichere Verbindung UV2 aufzubauen.

Der erste Kommunikationsteilnehmer A ist ausgestaltet, die dritte Adresskennung ID_PG_{B} des zweiten Datenanbieters PG_{B} zu ermitteln. Der erste Kommunikationsteilnehmer A weist eine Abbildungseinheit AE auf, welche ausgestaltet ist, mit Hilfe einer Rechenvorschrift f, welche auf die zweite Adresskennung ID_PI_{A} angewendet wird und damit die erste Adresskennung ID_CI_{A} erzeugt wird, weiterhin ist die Abbildungseinheit AE ausgestaltet, die zweite Adresskennung ID_PI_{A} an den ersten Datenanbieter PI_{A} weiter zu leiten. Der erste Datenverbraucher CI_{A} ist dazu ausgestaltet, die zweite Adresskennung ID_PI_{A} in einem ersten Anfrage-Telegramm RQ1 an den zweiten Datenanbieter PG_{B} zu senden. Der zweite Datenanbieter PG_{B} ist ausgestaltet, auf das erste Anfrage-Telegramm RQ1 mit einem ersten Antwort-Telegramm Res1 zu antworten. In dem ersten Antwort-Telegramm Res1 sind erste sicherheitsgerichtete Daten F_{B}-Data und die dritte Adresskennung ID_PG_{B} enthalten. Der erste Datenverbraucher CI_{A} weist Prüfmittel PM_{A} auf. Diese Prüfmittel PM_{A} sind ausgestaltet, zu prüfen, ob das erste Antwort-Telegramm Res1 die dritte Adresskennung ID_PG_{B} enthält. Diese Prüfung kann das Prüfmittel PM_{A} machen, weil der erste Kommunikationsteilnehmer A in einen früheren Schritt sich über einen Seitenkanal SK die dritte Adresskennung ID_PG_{B} geholt hat. Weiterhin ist das Prüfmittel PM_{A} ausgestaltet, für den Fall, dass diese Prüfung positiv ausfällt, die ersten sicherheitsgerichteten Daten F_{B}-Data für gültig zu erklären und ansonsten zu verwerfen, wodurch die erste unidirektionale Verbindung UV1 funktional abgesichert ist.

Der zweite Kommunikationsteilnehmer B weist eine Rückabbildungseinheit RAE auf, welche ausgestaltet ist, mit der Rechenvorschrift f aus der ersten Adresskennung ID_CI_{A} die zweite Adresskennung ID_PI_{A} zurück zu gewinnen und diese an den zweiten Datenverbraucher CG_{B} für eine spätere Anfrage zu übergeben.

Nun sind der erste Datenanbieter PI_{A} und der zweite Datenverbraucher CG_{B} ausgestaltet mit der ihnen jetzt beidseitig bekannten zweiten Adresskennung ID_PI_{A} die zweite unidirektionale Verbindung UV2 zwischen dem ersten Datenanbieter PI_{A} und den zweiten Datenverbraucher CG_{B} funktional abzusichern. Dazu weist im Wesentlichen der zweite Datenverbraucher CG_{B} ein Gegen-Prüfmittel PM_{B} auf, welches ausgestaltet ist, zu prüfen, ob das zweite Antwort-Telegramm Res2 die zweite Adresskennung ID_PI_{A} enthält, und für den Fall, dass diese Prüfung positiv ausfällt, werden die zweiten sicherheitsgerichteten Daten F_{A}-Data akzeptiert und ansonsten verworfen.

Als sicherheitsgerichtete Daten könnte beispielsweise das Datensignal eines Not-Aus-Schalters 100 weiter gereicht werden. Ein Not-Halt-Befehl 101 wird als ein funktional sicheres Datum F_{B}-Data über die erste unidirektionale Verbindung UV1 an den ersten Kommunikationsteilnehmer A weitergeleitet. Auch könnten sicherheitsgerichtete Daten ein Bereitschaftssignal 102 eines Roboters sein. Diese würden dann über die zweite unidirektionale Verbindung UV2 von den ersten Kommunikationsteilnehmer A an den zweiten Kommunikationsteilnehmer B weitergeleitet.

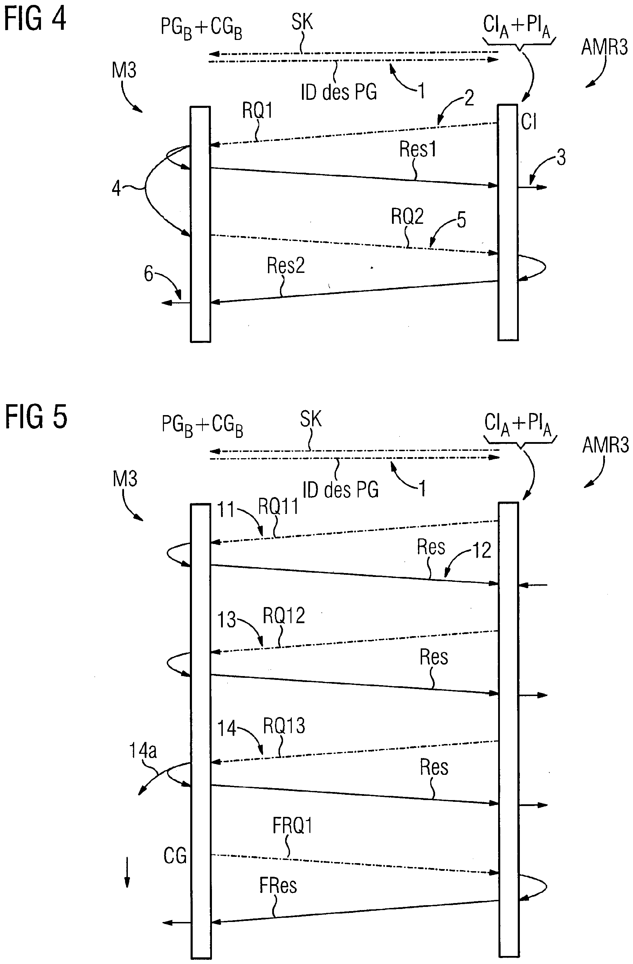

Die FIG 4 zeigt einen zeitlichen Ablauf von Anfrage-Telegrammen RQ1 bzw. Antwort-Telegrammen Res1. Auf der rechten Seite ist im Prinzip der erste Kommunikationsteilnehmer A in Form einer autonomen mobilen Robotereinheit AMR3 dargestellt. Der erste Kommunikationsteilnehmer A weist den ersten Datenverbraucher CI_{A} und den ersten Datenanbieter PI_{A} auf. Bei dem Verfahren zur funktional sicheren Verbindungsidentifizierung wird in einem ersten Schritt 1 vom ersten Kommunikationsteilnehmer A die dritte Adresskennung ID_PG_{B}, beispielsweise über einen Seitenkanal SK ermittelt. Nun ist die dritte Adresskennung ID_PG_{B} dem ersten Kommunikationsteilnehmer A bekannt. In einem zweiten Schritt 2 wird in dem ersten Kommunikationsteilnehmer A mit Hilfe der Rechenvorschrift f die erste Adresskennung ID_CI_{A} berechnet und diese erste Adresskennung ID_CI_{A} wird in einem ersten Anfrage-Telegramm RQ1 an den zweiten Datenanbieter PG_{B} gesendet. Der zweite Datenanbieter PG_{B} antwortet mit einem ersten Antwort-Telegramm Res1, in dem erste sicherheitsgerichtete Daten F_{B}-Data und die dritte Adresskennung ID_PG_{B} enthalten sind. In einem dritten Schritt 3 wird in dem ersten Kommunikationsteilnehmer A bzw. in dem ersten Datenverbraucher CI_{A} geprüft, ob das erste Antwort-Telegramm Res1 die dritte Adresskennung ID_PG_{B} enthält und für den Fall, dass diese Prüfung positiv ausfällt, werden die ersten sicherheitsgerichteten Daten F_{B}-Data akzeptiert und ansonsten verworfen.

In einem vierten Schritt 4 wird mit Hilfe der Rechenvorschrift f in dem zweiten Kommunikationsteilnehmer B ebenfalls die zweite Adresskennung ID_PI_{A} erzeugt und an den zweiten Datenverbraucher CG_{B} weitergegeben. Dieser setzt nun in einem fünften Schritt5 ein zweites Anfrage-Telegramm RQ2 an den ersten Datenanbieter PI_{A} ab. Der erste Datenanbieter PI_{A} antwortet mit einen zweiten Antwort-Telegramm Res2 in dem zweite sicherheitsgerichtete Daten F_{A}-Data und die zweite Adresskennung ID_PI_{A} enthalten sind.

In einem sechsten Schritt 6 wird dann geprüft, ob das zweite Antwort-Telegramm Res2 die zweite Adresskennung ID_PI_{A} enthält, und für den Fall, dass diese Prüfung positiv ausfällt, werden die zweiten sicherheitsgerichteten Daten F_{A}-Data akzeptiert und ansonsten verworfen.

Mit der FIG 5 ist ein alternativer zeitlicher Ablauf von Anfrage- und Antwort-Telegrammen dargestellt. Dieses Verfahren würde eingesetzt werden, wenn ein maximaler Wert der zweiten Adresskennung ID_PI_{A} eine in einem verwendeten Protokoll zur Verfügung stehende Wortbreite überschreitet. Dann würde der erste Datenverbraucher CI_{A} die zweite Adresskennung ID_PI_{A} in Teile part1,part2,part3 aufteilen und die Teile part1,part2, part3 mit Teil-Anfrage-Telegrammen RQ11,RQ12,RQ13 an den zweiten Datenanbieter PG_{B} senden. Die Teile part1,part2,part3 werden im zweiten Datenanbieter PG_{B} wieder zusammengesetzt und die zweite Adresskennung ID_PI_{A} wird ermittelt.

Demnach wird wiederum in einem Schritt 1 über einen Seitenkanal SK die dritte Adresskennung ID_PG_{B} ermittelt. In einem alternativen ersten Schritt 11 wird mittels eines ersten Teilanfrage-Telegramms RQ11 der erste Teil part1 übertragen. In einem alternativen zweiten Schritt 12 wird auf diese Übertragung mit einem Antwort-Telegramm Res geantwortet. In einem alternativen dritten Schritt 13 wird mit einem zweiten Teilanfrage-Telegramm RQ12 der zweite Teil part 2 übertragen. In einem alternativen vierten Schritt 14 wird mit einem dritten Teilanfrage-Telegramm RQ13 der dritte Teil part 3 übertragen. Nun wird in einem alternativen vierten Zwischenschritt 14a die Adresskennung aus den drei Teilen part1,part2,part3 zusammengesetzt und es wird die Rechenvorschrift f auf die zusammengesetzten Teile part1,part2,part3 angewendet. Nun wird ein finales Anfrage-Telegramm FRQ1 gesendet, worauf mit einem finalen Antwort-Telegramm FRES geantwortet wird. In diesem finalen Antwort-Telegramm FRES sind die sicherheitsgerichteten Daten F_{A}-Data und die zweite Adresskennung ID_PI_{A} vorhanden. Die zweite Adresskennung ID_PI_{A} ist zwar jetzt eine Adresse mit langer Wortbreitung, aber die Besonderheit bei dem eingesetzten Protokoll ist es, dass in den Antwort-Telegrammen mehr Platz vorgesehen ist als in den Anfrage-Telegrammen.

## Patentansprüche

1. Verfahren zur funktional sicheren Verbindungsidentifizierung bei einem zweiseitigen Datenaustausch von sicherheitsgerichteten Daten (F_{B}-Data, F_{A}-Data) zwischen zwei Kommunikationsteilnehmern (A,B) in einem Kommunikationssystem (KS), wobei
- sicherheitsgerichtete Daten mittels sicherheitsgerichteter Kommunikation ausgetauscht werden,
- Ziel- und Quelladressen umfassende Adressbeziehungen zur sicherheitsgerichteten Kommunikation fest projektiert werden,
- in einem ersten Kommunikationsteilnehmer (A) ein erster Datenverbraucher (CI_{A}) mit einer ersten Adresskennung (ID_CI_{A}) und ein erster Datenanbieter (PI_{A}) mit einer zweiten Adresskennung (ID_PI_{A}) betrieben wird,
- in einem zweiten Kommunikationsteilnehmer (B) ein zweiter Datenanbieter (PG_{B}) mit einer dritten Adresskennung (ID_PG_{B}) betrieben wird und zusätzlich ein zweiter Daten-Verbraucher (CG_{B}) betrieben wird, und
- zwischen dem ersten Datenverbraucher (CI_{A}) und dem zweiten Datenanbieter (PG_{B}) eine erste unidirektionale Verbindung (UV1) aufgebaut wird und
- zwischen dem ersten Datenanbieter (PI_{A}) und dem zweiten Datenverbraucher (CG_{B}) eine zweite unidirektionale Verbindung (UV2) aufgebaut wird,
**dadurch gekennzeichnet, dass**
- vom ersten Kommunikationsteilnehmer (A) die dritte Adresskennung (ID_PG_{B}) ermittelt wird, wobei die Ermittlung der dritten Adresskennung (ID_PG_{B}) über einen vom Kommunikationssystem (KS) unabhängigen Seitenkanal (SK) oder anhand einer Konfigurationsdatenbank (KD) unter zu Hilfenahmen von Positionsdaten (x,y,z) des ersten Kommunikationsteilnehmers (A) erfolgt,
- im ersten Kommunikationsteilnehmer (A) mit Hilfe einer Rechenvorschrift (f), welche auf einen eindeutigen Wert angewendet wird, eine Kennung erzeugt wird, und diese Kennung dem ersten Datenverbraucher (CI_{A}) mitgeteilt wird,
- der erste Datenverbraucher (CI_{A}) den eindeutigen Wert in einem ersten Anfrage-Telegramm (RQ1) an den zweiten Datenanbieter (PG_{B}) sendet,
- der zweite Datenanbieter (PG_{B}) mit einem ersten Antwort-Telegramm (Res1) an den ersten Datenverbraucher antwortet, in dem erste sicherheitsgerichtete Daten (F_{B}-Data) und die dritte Adresskennung (ID_PG_{B}) enthalten sind,
- wobei im ersten Datenverbraucher (CI_{A}) geprüft wird, ob das erste Antwort-Telegramm (Res1) die dritte Adresskennung (ID_PG_{B}) enthält, und für den Fall, dass diese Prüfung positiv ausfällt, werden die ersten sicherheitsgerichteten Daten (F_{B}-Data) akzeptiert, für den Fall, dass diese Prüfung negative ausfällt werden die ersten sicherheitsgerichteten Daten verworfen, wobei die erste unidirektionale Verbindung (UV1) mittels der dritte Adresskennung (ID_PG_{B}) funktional abgesichert wird,
- mit Hilfe der Rechenvorschrift (f) im zweiten Kommunikationsteilnehmer (B) ebenfalls die Kennung erzeugt wird,
- und die Kennung zur funktionalen Absicherung der zweiten unidirektionalen Verbindung (UV2) zwischen dem ersten Datenanbieter (PI_{A}) und dem zweiten Datenverbraucher (CG_{B}) genutzt wird.

2. Verfahren nach Anspruch 1, wobei
- der zweite Datenverbraucher (CG_{B}) ein zweites Anfrage-Telegramm (RQ2) an den ersten Datenanbieter (PI_{A}) sendet,
- der erste Datenanbieter (PI_{A}) mit einem zweiten Antwort-Telegramm (Res2) an den zweiten Datenverbraucher antwortet, in dem zweite sicherheitsgerichtete Daten (F_{A}-Data) und die Kennung enthalten sind, wobei im zweiten Datenverbraucher (CG_{B}) geprüft wird, ob das zweite Antwort-Telegramm (Res2) die Kennung enthält, und für den Fall, dass diese Prüfung positiv ausfällt, werden die zweiten sicherheitsgerichteten Daten (F_{A}-Data) akzeptiert in dem Fall, dass diese Prüfung negative ausfällt, werden die zweiten sicherheitsgerichteten Daten verworfen.

3. Verfahren nach Anspruch 2, wobei die zweite Adresskennung (ID_PI_{A}) als der eindeutige Wert verwendet wird.

4. Verfahren nach einem der Ansprüche 1 bis 3, wobei das Kommunikationssystem (KS) auf OPC UA Client/Server Mechanismen mit einer TCP/IP-Kommunikation basiert,
oder auf OPC UA Pup/Sub Mechanismen mit einer TCP/IP-Kommunikation ergänzt um die Mechanismen für ein Time Sensitiv Network (TSN) basiert.

5. Verfahren nach einem der Ansprüche 1 bis 4, wobei der erste Kommunikationsteilnehmer (A) durch einen oder in einer autonomen Robotereinheit (AMR1,AMR2,AMR3) betrieben wird und der zweite Kommunikationsteilnehmer (B) durch eine oder in einer Maschine (M1,M2,M3) betrieben wird, wobei nach einem Anfahren der Robotereinheit (AMR1,AMR2,AMR3) an die Maschine (M1,M2,M3) die Kommunikation aufgebaut wird.

6. Verfahren nach einem der Ansprüche 3 bis 5, wobei für den Fall, dass ein maximaler Zahlen-Wert der zweiten Adresskennung (ID_PI_{A}) eine in einem verwendeten Protokoll zur Verfügung stehende Wortbreite überschreitet, der erste Datenverbraucher (CI_{A}) die zweite Adresskennung (ID_PI_{A}) in Teile (partl,part2,part3) aufteilt und die Teile (part1,part2, part3) mit Teil-Anfrage-Telegrammen (RQ11, RQ12, RQ13) an den zweiten Datenanbieter (PG_{B}) sendet, und der zweite Datenanbieter die Teile (part1, part2,part3) zusammensetzt und die zweite Adresskennung (ID_PI_{A}) ermittelt, wobei nach feststehender zweiten Adresskennung (ID_PI_{A}) der zweite Datenverbraucher (CG_{B}) ein Final-Anfrage-Telegramm (FRQ2) sendet und das Final-Anfrage-Telegramm (FRQ2) wiederum mit dem zweiten Antwort-Telegramm (Res2) beantwortet wird, in dem die zweiten sicherheitsgerichteten Daten (F_{A}-Data) und die zweite Adresskennung (ID_PI_{A}) enthalten sind.

7. Anordnung (CCC) mit einem ersten Kommunikationsteilnehmer (A) und einem zweiten Kommunikationsteilnehmer (B), welche über ein Kommunikationssystem (KS) Daten austauschen,
wobei
- der erste Kommunikationsteilnehmer (A) einen ersten Datenverbraucher (CI_{A}) mit einer ersten Adresskennung (ID_CI_{A}) und einen ersten Datenanbieter (PI_{A}) mit einer zweiten Adresskennung (ID_PI_{A}) aufweist,
- der zweite Kommunikationsteilnehmer (B) einen zweiten Datenanbieter (PGB) mit einer dritten Adresskennung (ID_PG_{B}) und einen zweiten Datenverbraucher (CGB) aufweist, wobei Mittel vorhanden sind um
- zwischen dem ersten Datenverbraucher (CI_{A}) und dem zweiten Datenanbieter (PG_{B}) eine erste unidirektionale Verbindung (UV1) und
- zwischen dem ersten Datenanbieter (PIA) und dem zweiten Datenverbraucher (CGB) eine zweite unidirektionale Verbindung (UV2) aufzubauen,
**dadurch gekennzeichnet, dass**
- der erste Kommunikationsteilnehmer (A) ausgestaltet ist die dritte Adresskennung (ID_PG_{B}) zu ermitteln, wobei die Ermittlung der dritten Adresskennung (ID_PG_{B}) über einen vom Kommunikationssystem (KS) unabhängigen Seitenkanal (SK) oder anhand einer Konfigurationsdatenbank (KD) unter zu Hilfenahmen von Positionsdaten (x,y,z) des ersten Kommunikationsteilnehmers (A) erfolgt,
- der erste Kommunikationsteilnehmer (A) eine Abbildungseinheit (AE) aufweist, welche ausgestaltet ist mit Hilfe einer Rechenvorschrift (f), welche auf einen eindeutigen Wert angewendet wird, eine Kennung zu erzeugen,
- weiterhin ist die Abbildungseinheit (AE) ausgestaltet die Kennung an den ersten Datenverbraucher (CI_{A}) weiterzugeben,
- der erste Datenverbraucher (CI_{A}) ausgestaltet ist den eindeutigen Wert in einem ersten Anfrage-Telegramm (RQ1) an den zweiten Datenanbieter (PG_{B}) zu senden,
- der zweite Datenanbieter (PG_{B}) ausgestaltet ist auf das erste Anfrage-Telegramm (RQ1) mit einem ersten Antwort-Telegramm (Res1), in dem erste sicherheitsgerichtete Daten (F_{B}-Data) und die dritte Adresskennung (ID_PG_{B}) enthalten sind, zu antworten, wobei sicherheitsgerichtete Daten mittels sicherheitsgerichteter Kommunikation ausgetauscht werden und Ziel- und Quelladressen umfassende Adressbeziehungen zur sicherheitsgerichteten Kommunikation fest projektiert werden,
- wobei der erste Datenverbraucher (CI_{A}) weiterhin Prüfmittel (PM_{A}) aufweist, welche ausgestaltet sind zu prüfen, ob das erste Antwort-Telegramm (Res1) die dritte Adresskennung (ID_PG_{B}) enthält, und weiterhin ist das Prüfmittel(PMA) ausgestaltet, für den Fall, dass diese Prüfung positiv ausfällt, die ersten sicherheitsgerichteten Daten (F_{B}-Data) für gültig zu erklären, für den Fall, dass diese Prüfung negativ ausfällt, die sicherheitsgerichteten Daten zu verwerfen, wobei die erste unidirektionale Verbindung (UV1) mittels der dritte Adresskennung (ID_PG_{B}) funktional abgesichert ist,
- der zweite Kommunikationsteilnehmer (B) eine Rück-Abbildungseinheit (RAE) aufweist, welche ausgestaltet ist, mit der Rechenvorschrift (f) aus dem eindeutigen Wert die Kennung zurück zu gewinnen und diese an den zweiten Datenverbraucher (CG_{B}) zu übergeben,
- und der erste Datenanbieter (PI_{A}) und der zweite Datenverbraucher (CGB) ausgestaltet sind mit der ihnen jetzt beidseitig bekannten Kennung die zweite unidirektionale Verbindung (UV2) zwischen dem ersten Datenanbieter (PIA) und dem zweiten Datenverbraucher (CG_{B}) funktional abzusichern.

8. Anordnung (CCC) nach Anspruch 7, wobei
- der zweite Datenverbraucher (CG_{B}) ausgestaltet ist ein zweites Anfrage-Telegramm (RQ2) an den ersten Datenanbieter (PI_{A}) zu senden,
- der erste Datenanbieter (PI_{A}) ausgestaltet ist mit einem zweiten Antwort-Telegramm (Res2) zu antworten, in dem zweite sicherheitsgerichtete Daten (F_{A}-Data) und die Kennung enthalten sind,
wobei der zweite Datenverbraucher (CG_{B}) Gegen-Prüfmittel (PM_{B}) aufweist, welche ausgestaltet sind zu prüfen, ob das zweite Antwort-Telegramm (Res2) die Kennung enthält, und für den Fall, dass diese Prüfung positiv ausfällt, werden die zweiten sicherheitsgerichteten Daten (F_{A}-Data) akzeptiert, für den Fall, dass diese Prüfung negativ ausfällt, werden die zweiten sicherheitsgerichteten Daten verworfen.

9. Anordnung (CCC) nach Anspruch 7 oder 8, wobei das Kommunikationssystem (KS) als ein Controller-Controller-Kommunikationssystem basierend auf OPC UA Client/Server Mechanismen mit einer TCP/IP-Kommunikation oder auf OPC UA Pup/Sub Mechanismen mit einer TCP/IP-Kommunikation ergänzt um die Mechanismen für ein Time Sensitiv Network (TSN) vorhanden ausgestaltet ist.

10. Anordnung (CCC) nach einem der Ansprüche 7 bis 9, aufweisend einen vom Kommunikationssystem (KS) unabhängigen Seitenkanal (SK), welcher ausgestaltet ist die dritte Adresskennung (ID_PG_{B}) für den ersten Datenverbraucher (CI_{A}) bereitzustellen.

11. Anordnung (CCC) nach einem der Ansprüche 7 bis 10, aufweisend ein Ermittlungsmittel (EM), welches ausgestaltet ist auf eine Konfigurationsdatenbank (KD) zuzugreifen und weiterhin umfasst der erste Kommunikationsteilnehmer (A) Positionsermittlungsmittel (PE), welche ausgestaltet sind, die Positionsdaten (x,y,z) des ersten Kommunikationsteilnehmers (A) zu ermitteln, dabei ist das Ermittlungsmittel (EM) dazu ausgestaltet, auf der Basis der Positionsdaten (x,y,z) mit der Konfigurationsdatenbank (KD) die dritte Adresskennung (ID_PG_{B}) zu ermitteln.

12. Anordnung (CCC) nach einem der Ansprüche 7 bis 11, wobei eine autonome mobile Robotereinheit (AMR1,AMR2,AMR3) den ersten Kommunikationsteilnehmer (A) aufweist und eine Maschine (M1,M2,M3) den zweiten Kommunikationsteilnehmer (B) aufweist, wobei die Robotereinheit (AMR1,AMR2,AMR3) ausgestaltet ist, die Maschine (M1,M2,M3) anzufahren und eine Kommunikation aufzubauen.

## Claims

1. Method for functionally safe connection identification for a bilateral data interchange of safety-oriented data (F_{B}-Data, F_{A}-Data) between two communication subscribers (A, B) in a communication system (KS), wherein
- safety-oriented data are interchanged by means of safety-oriented communication,
- address relationships that comprise destination addresses and source addresses are firmly planned for the safety-oriented communication,
- a first data consumer (CI_{A}) having a first address identifier (ID_CI_{A}) and a first data provider (PI_{A}) having a second address identifier (ID_PI_{A}) are operated in a first communication subscriber (A),
- a second data provider (PG_{B}) having a third address identifier (ID_PG_{B}) is operated, and additionally a second data consumer (CG_{B}) is operated, in a second communication subscriber (B), and
- a first unidirectional connection (UV1) is set up between the first data consumer (CI_{A}) and the second data provider (PG_{B}), and
- a second unidirectional connection (UV2) is set up between the first data provider (PI_{A}) and the second data consumer (CG_{B}) ,
**characterized in that**
- the first communication subscriber (A) ascertains the third address identifier (ID_PG_{B}), the third address identifier (ID_PG_{B}) being ascertained via a side channel (SK) that is independent of the communication system (KS) or on the basis of a configuration database (KD) using position data (x, y, z) of the first communication subscriber (A),
- an identifier is produced in the first communication subscriber (A) using a computation rule (f) that is applied to a unique value, and this identifier is communicated to the first data consumer (CI_{A}),
- the first data consumer (CI_{A}) transmits the unique value to the second data provider (PG_{B}) in a first request message (RQ1),
- the second data provider (PG_{B}) responds to the first data consumer with a first response message (Res1) containing first safety-oriented data (F_{B}-Data) and the third address identifier (ID_PG_{B}),
- a check being performed in the first data consumer (CI_{A}) to determine whether the first response message (Res1) contains the third address identifier (ID_PG_{B}), and, if the result of this check is positive, the first safety-oriented data (F_{B}-Data) are accepted, and if the result of this check is negative, the first safety-oriented data are rejected, the first unidirectional connection (UV1) being functionally protected by means of the third address identifier (ID_PG_{B}),
- the computation rule (f) is used to likewise produce the identifier in the second communication subscriber (B),
- and the identifier is used to functionally protect the second unidirectional connection (UV2) between the first data provider (PI_{A}) and the second data consumer (CG_{B}).

2. Method according to Claim 1, wherein
- the second data consumer (CG_{B}) transmits a second request message (RQ2) to the first data provider (PI_{A}),
- the first data provider (PI_{A}) responds to the second data consumer with a second response message (Res2) containing second safety-oriented data (F_{A}-Data) and the identifier,
a check being performed in the second data consumer (CG_{B}) to determine whether the second response message (Res2) contains the identifier, and, if the result of this check is positive, the second safety-oriented data (F_{A}-Data) are accepted, and if the result of this check is negative, the second safety-oriented data are rejected.

3. Method according to Claim 2, wherein the second address identifier (ID_PI_{A}) is used as the unique value.

4. Method according to one of Claims 1 to 3, wherein the communication system (KS) is based on OPC UA client/server mechanisms with TCP/IP communication, or is based on OPC UA Pup/Sub mechanisms with TCP/IP communication to which the mechanisms for a time-sensitive network (TSN) have been added.

5. Method according to one of Claims 1 to 4, wherein the first communication subscriber (A) is operated by or in an autonomous robot unit (AMR1, AMR2, AMR3) and the second communication subscriber (B) is operated by or in a machine (M1, M2, M3), the communication being set up after the robot unit (AMR1, AMR2, AMR3) approaches the machine (M1, M2, M3).

6. Method according to one of Claims 3 to 5, wherein, if a maximum numerical value of the second address identifier (ID_PI_{A}) exceeds a word length available in a protocol that is used, the first data consumer (CI_{A}) splits the second address identifier (ID_PI_{A}) into parts (part1, part2, part3) and transmits the parts (part1, part2, part3) to the second data provider (PG_{B}) using partial request messages (RQ11, RQ12, RQ13), and the second data provider assembles the parts (part1, part2, part3) and ascertains the second address identifier (ID_PI_{A}), wherein, after the second address identifier (ID_PI_{A}) is definite, the second data consumer (CG_{B}) transmits a final request message (FRQ2) and the final request message (FRQ2) is in turn answered with the second response message (Res2) containing the second safety-oriented data (F_{A}-Data) and the second address identifier (ID_PI_{A}) .

7. Arrangement (CCC) having a first communication subscriber (A) and a second communication subscriber (B) that interchange data via a communication system (KS),
wherein
- the first communication subscriber (A) has a first data consumer (CI_{A}) having a first address identifier (ID_CI_{A}) and a first data provider (PI_{A}) having a second address identifier (ID_PI_{A}),
- the second communication subscriber (B) has a second data provider (PGB) having a third address identifier (ID_PG_{B}) and a second data consumer (CGB), means being present in order to set up
- a first unidirectional connection (UV1) between the first data consumer (CI_{A}) and the second data provider (PG_{B}) and
- a second unidirectional connection (UV2) between the first data provider (PIA) and the second data consumer (CGB),
**characterized in that**
- the first communication subscriber (A) is designed to ascertain the third address identifier (ID_PG_{B}), the third address identifier (ID_PG_{B}) being ascertained via a side channel (SK) that is independent of the communication system (KS) or on the basis of a configuration database (KD) using position data (x, y, z) of the first communication subscriber (A),
- the first communication subscriber (A) has a mapping unit (AE) designed to use a computation rule (f), which is applied to a unique value, to produce an identifier,
- additionally the mapping unit (AE) is designed to forward the identifier to the first data consumer - (CI_{A}),
- the first data consumer (CI_{A}) is designed to transmit the unique value to the second data provider (PG_{B}) in a first request message (RQ1),
- the second data provider (PG_{B}) is designed to respond to the first request message (RQ1) with a first response message (Res1) containing first safety-oriented data (F_{B}-Data) and the third address identifier (ID_PG_{B}), safety-oriented data being interchanged by means of safety-oriented communication, and address relationships that comprise destination addresses and source addresses being firmly planned for the safety-oriented communication,
- the first data consumer (CI_{A}) additionally having checking means (PM_{A}) designed to check whether the first response message (Res1) contains the third address identifier (ID_PG_{B}), and additionally the checking means (PMA) is designed so as, if the result of this check is positive, to declare the first safety-oriented data (F_{B}-Data) to be valid, and if the result of this check is negative, to reject the safety-oriented data, the first unidirectional connection (UV1) being functionally protected by means of the third address identifier (ID_PG_{B}),
- the second communication subscriber (B) has a reverse mapping unit (RAE) designed to use the computation rule (f) to recover the identifier from the unique value and to transfer said identifier to the second data consumer (CG_{B}),
- and the first data provider (PI_{A}) and the second data consumer (CGB) are designed to use the identifier that is now known to them on both sides to functionally protect the second unidirectional connection (UV2) between the first data provider (PIA) and the second data consumer (CG_{B}).

8. Arrangement (CCC) according to Claim 7, wherein
- the second data consumer (CG_{B}) is designed to transmit a second request message (RQ2) to the first data provider (PI_{A}),
- the first data provider (PI_{A}) is designed to respond with a second response message (Res2) containing second safety-oriented data (F_{A}-Data) and the identifier,
the second data consumer (CG_{B}) having cross-checking means (PM_{B}) designed to check whether the second response message (Res2) contains the identifier, and, if the result of this check is positive, the second safety-oriented data (F_{A}-Data) are accepted, and if the result of this check is negative, the second safety-oriented data are rejected.

9. Arrangement (CCC) according to Claim 7 or 8, wherein the communication system (KS) is designed as a controller-controller communication system based on OPC UA client/server mechanisms with TCP/IP communication or on OPC UA Pup/Sub mechanisms with TCP/IP communication to which the mechanisms for a time-sensitive network (TSN) have been added.

10. Arrangement (CCC) according to one of Claims 7 to 9, having a side channel (SK) that is independent of the communication system (KS) and that is designed to provide the third address identifier (ID_PG_{B}) for the first data consumer (CI_{A}) .

11. Arrangement (CCC) according to one of Claims 7 to 10, having an ascertaining means (EM) designed to access a configuration database (KD), and additionally the first communication subscriber (A) comprises position ascertaining means (PE) designed to ascertain the position data (x, y, z) of the first communication subscriber (A), the ascertaining means (EM) being designed to take the position data (x, y, z) as a basis for using the configuration database (KD) to ascertain the third address identifier (ID_PG_{B}).

12. Arrangement (CCC) according to one of Claims 7 to 11, wherein an autonomous mobile robot unit (AMR1, AMR2, AMR3) has the first communication subscriber (A) and a machine (M1, M2, M3) has the second communication subscriber (B), the robot unit (AMR1, AMR2, AMR3) being designed to approach the machine (M1, M2, M3) and to set up a communication.

## Revendications

1. Procédé d'identification de connexion sécurisée fonctionnellement dans un échange de données bilatéral de données (F_{B}-Data, F_{A}-Data) visant à la sécurité entre deux participants (A, B) de communication à un système (KS) de communication, dans lequel
- on échange des données visant à la sécurité au moyen d'une communication visant à la sécurité,
- on met en projet ferme des relations d'adresse comprenant des adresses cibles et des adresses sources pour la communication visant à la sécurité,
- dans un premier participant (A) à la communication, on fait fonctionner un premier consommateur (CI_{A}) de données ayant une première caractérisation (ID_CI_{A}) d'adresse et un premier offreur (PI_{A}) de données ayant une deuxième caractérisation (ID_PI_{A}) d'adresse,
- dans un deuxième participant (B) à la communication, on fait fonctionner un deuxième offreur (PG_{B}) de données ayant une troisième caractérisation (ID_PG_{B}) d'adresse et en outre un deuxième consommateur (CG_{B}) de données, et
- on établit une première connexion (UV1) unidirectionnelle entre le premier consommateur (CI_{A}) de données et le deuxième offreur (PG_{B}) de données et
- on établit une deuxième connexion (UV2) unidirectionnelle entre le premier offreur (PI_{A}) de données et le deuxième consommateur (CG_{B}) de données,
**caractérisé en ce que**
- l'on détermine la troisième caractérisation (ID_PG_{B}) d'adresse par le premier participant (A) à la communication, la détermination de la troisième caractérisation (ID_PG_{B}) d'adresse s'effectuant par un canal (SK) latérale indépendant du système (KS) de communication ou à l'aide d'une base (KD) de données de configuration en s'aidant de données (x, y, z) de position du premier participant (A) à la communication,
- on produit, dans le premier participant (A) à la communication, à l'aide d'une prescription (f) de calcul, que l'on applique à une valeur univoque, une caractérisation et on fait part de cette caractérisation au premier consommateur (CI_{A}) de données,
- le premier consommateur (CI_{A}) de données envoie la valeur univoque dans un premier télégramme (RQ1) de données au deuxième offreur (PG_{B}) de données,
- le deuxième offreur (PG_{B}) de données répond au premier consommateur de données par un premier télégramme (Res1) de réponse, dans lequel des données (F_{B}-Data) visant à la sécurité et la troisième caractérisation (ID_PG_{B}) d'adresse sont contenues,
- on contrôle, dans le premier consommateur (CI_{A}) de données, si le premier télégramme (Res1) de réponse contient la troisième caractérisation (ID_PG_{B}) d'adresse et dans le cas où ce contrôle s'avère positif, on accepte les premières données (F_{B}-Data) visant à la sécurité, dans le cas où ce contrôle s'avère négatif, on rejette les données visant à la sécurité, dans lequel on sécurise fonctionnellement la première connexion (UV1) unidirectionnelle au moyen de la troisième caractérisation (ID_PG_{B}) d'adresse,
- à l'aide de la prescription (f) de calcul, on produit également la caractérisation dans le deuxième participant (B) à la communication,
- et on utilise la caractérisation pour la sécurisation fonctionnelle de la deuxième connexion (UV2) unidirectionnelle entre le premier offreur (PI_{A}) de données et le deuxième consommateur (CG_{B}) de données.

2. Procédé suivant la revendication 1, dans lequel
- le deuxième consommateur (CG_{B}) de données envoie un deuxième télégramme (RQ2) de demande au premier offreur (PI_{A}) de données,
- le premier offreur (PI_{A}) de données répond au deuxième consommateur de données par un deuxième télégramme (Res2) de réponse, dans lequel des deuxièmes données (F_{A}-Data) visant à la sécurité et la caractérisation sont contenues, dans lequel on contrôle, dans le deuxième consommateur (CG_{B}) de données, si le deuxième télégramme (Res2) de réponse contient la caractérisation, et dans le cas où ce contrôle s'avère positif, on accepte les deuxièmes données (F_{A}-Data) visant à la sécurité et, dans le cas où ce contrôle s'avère négatif, on rejette les deuxièmes données visant à la sécurité.

3. Procédé suivant la revendication 2, dans lequel on utilise la deuxième caractérisation (ID_PI_{A}) d'adresse comme la valeur univoque.

4. Procédé suivant l'une des revendications 1 à 3, dans lequel le système (KS) de communication repose sur des mécanismes client-serveur OPC UA ayant une communication TCP/IP ou repose sur des mécanismes pup/sub OPC UA ayant une communication TCP/IP complétée des mécanismes pour un Time Sensitiv Network (TSN).

5. Procédé suivant l'une des revendications 1 à 4, dans lequel on fait fonctionner le premier participant (A) à la communication par ou dans une unité (AMR1, AMR2, AMR3) robotique autonome et on fait fonctionner le deuxième participant (B) à la communication par une ou dans une machine (M1, M2, M3), dans lequel, après une mise en route de l'unité (AMR1, AMR2, AMR3) robotique, on établit la communication sur la machine (M1, M2, M3).

6. Procédé suivant l'une des revendications 3 à 5, dans lequel, dans le cas où une valeur numérique maximum de la deuxième caractérisation (ID_PI_{A}) d'adresse dépasse une largeur de mot disponible dans un protocole utilisé, le premier consommateur (CI_{A}) de données subdivise la deuxième caractérisation (ID_PI_{A}) d'adresse en des parties (part1, part2, part3) et envoie les parties (part1, part2, part3) par des télégrammes (RQ11, RQ12, RQ13) de demande partiels au deuxième offreur (PG_{B}) de données, et le deuxième offreur rassemble les parties (part1, part2, part3) et détermine la deuxième caractérisation (ID_PI_{A}) d'adresse, dans lequel, après que la deuxième caractérisation (ID_PI_{A}) d'adresse est fixée, le deuxième consommateur (CG_{B}) envoie un télégramme (FRQ2) de demande final et il est répondu au télégramme (FRQ2) de demande final à nouveau par le deuxième télégramme (Res2) de réponse, dans lequel les deuxièmes données (F_{A}-Data) visant à la sécurité et la deuxième caractérisation (ID_PI_{A}) d'adresse sont contenues.

7. Dispositif (CCC) comprenant un premier participant (A) à la communication et un deuxième participant (B) à la communication, qui échangent des données par un système (KS) de communication, dans lequel
- le premier participant (A) à la communication a un premier consommateur (CI_{A}) de données ayant une première caractérisation (ID_CI_{A}) d'adresse et une premier offreur (PI_{A}) de données ayant une deuxième caractérisation (ID_PI_{A}) d'adresse,
- le deuxième participant (B) à la communication a un deuxième offreur (PGB) de données ayant une troisième caractérisation (ID_PG_{B}) d'adresse et un deuxième consommateur (CGB) de données, dans lequel il y a des moyens pour établir
- une première connexion (UV1) unidirectionnelle entre le premier consommateur (CI_{A}) de données et le deuxième offreur (PG_{B}) de données et
- une deuxième connexion (UV2) unidirectionnelle entre le premier offreur (PIA) de données et le deuxième consommateur (CGB) de données,
**caractérisé en ce que**
- le premier participant (A) à la communication est conformé pour déterminer la troisième caractérisation (ID_PG_{B}) d'adresse, la détermination de la troisième caractérisation (ID_PG_{B}) d'adresse s'effectuant par un canal (SK) latéral indépendant du système (KS) de communication ou à l'aide d'une base (KD) de données de configuration en s'aidant de données (x, y, z) de position du premier participant (A) à la communication,
- le premier participant (A) à la communication a une unité (AE) de reproduction, qui est conformée pour produire une caractérisation à l'aide d'une prescription (f) de calcul, qui est appliquée à une valeur univoque,
- l'unité (AE) de reproduction est conformée en outre pour acheminer la caractérisation au premier consommateur (CI_{A}) de données,
- le premier consommateur (CI_{A}) de données est conformé pour envoyer la valeur uniforme dans un premier télégramme (RQ1) de demande au deuxième offreur (PG_{B}) de données,
- le deuxième offreur (PG_{B}) de données est conformé pour répondre au premier télégramme (RQ1) de demande par un premier télégramme (Res1) de réponse, dans lequel des premières données (F_{B}-Data) visant à la sécurité et la troisième caractérisation (ID_PG_{B}) d'adresse sont contenues, dans lequel on échange des données visant à la sécurité au moyen d'une communication visant à la sécurité et on fait le projet ferme de relations d'adresse comprenant des adresses cibles et des adresses sources pour la communication visant à la sécurité,
- dans lequel le premier consommateur (CI_{A}) de données a en outre des moyens (PM_{A}) de contrôle, qui sont conformés pour contrôler si le premier télégramme (Res1) de réponse contient la troisième caractérisation (ID_PG_{B}) d'adresse et en outre le moyen (PMA) de contrôle est conformé pour, dans le cas où ce contrôle s'avère positif, déclarer comme valables les premières données (F_{B}-Data) visant à la sécurité et, dans le cas où ce contrôle s'avère négatif, rejeter les données visant à la sécurité, dans lequel la première communication (UV1) unidirectionnelle est sécurisée fonctionnellement au moyen de la troisième caractérisation (ID_PG_{B}) d'adresse,
- le deuxième participant (B) à la communication a une unité (RAE) de reproduction en retour, qui est conformée pour obtenir en retour, par la prescription (f) de calcul, à partir de la valeur univoque, la caractérisation et transmettre celle-ci au deuxième consommateur (CG_{B}) de données,
- et le premier offreur (PI_{A}) de données et le deuxième consommateur (CGB) de données sont conformés pour, par la caractérisation qui leur est maintenant connue des deux côtés, sécuriser fonctionnellement la deuxième connexion (UV2) unidirectionnelle entre le premier offreur (PIA) de données et le deuxième consommateur (CG_{B}) de données.

8. Dispositif (CCC) suivant la revendication 7, dans lequel
- le deuxième consommateur (CG_{B}) de données est conformé pour envoyer un deuxième télégramme (RQ2) de demande au premier offreur (PI_{A}) de données,
- le premier offreur (PI_{A}) de données est conformé pour répondre par un deuxième télégramme (Res2) de réponse, dans lequel des deuxièmes données (F_{A}-Data) visant à la sécurité et la caractérisation sont contenues,
dans lequel le deuxième consommateur (CG_{B}) de données a des moyens (PM_{B}) de contre-contrôle, qui sont conformées pour contrôler, si le deuxième télégramme (Res2) de réponse contient la caractérisation et, dans le cas où ce contrôle s'avère positif, on accepte les données (F_{A}-Data) visant à la sécurité et, dans le cas où ce contrôle s'avère négatif, on rejette les deuxièmes données visant à la sécurité.

9. Dispositif (CCC) suivant la revendication 7 ou 8, dans lequel le système (KS) de communication est conformé en système de communication unité de commande - unité de commande reposant sur des mécanismes client/serveur OPC UA ayant une communication TCP/IP ou sur des mécanismes pup/sub OPC UA ayant une communication TCP/IP complétée des mécanismes pour un Time Sensitiv Network (TSN).

10. Dispositif (CCC) suivant l'une des revendications 7 à 9, comportant un canal (SK) latéral, qui est indépendant du système (KS) de communication et qui est conformé pour mettre la troisième caractérisation (ID_PG_{B}) d'adresse à disposition du premier consommateur (CI_{A}) de données.

11. Dispositif (CCC) suivant l'une des revendications 7 à 10, comportant un moyen (EM) de détermination, qui est conformé pour accéder à une base (KD) de données de configuration et en outre le premier participant (A) à la communication comprend des moyens (PE) de détermination de position, qui sont conformés pour déterminer les données (x, y, z) de position du premier participant (A) à la communication, le moyen (EM) de détermination étant conformé pour, sur la base des données (x, y, z) de position, déterminer la troisième caractérisation (ID_PG_{B}) d'adresse par la base (KD) de données de configuration.

12. Dispositif (CCC) suivant l'une des revendications 7 à 11, dans lequel une unité (AMR1, AMR2, AMR3) robotique mobile autonome a le premier participant (A) à la communication et une machine (M1, M2, M3) a le deuxième participant (B) à la communication, l'unité (AMR1, AMR2, AMR3) robotique étant conformée pour mettre en route la machine (M1, M2, M3) et établir une communication.
